Europäisches Patentamt

European Patent Office

Office européen des brevets

(19)

(11) Veröffentlichungsnummer: **0 079 624**
**A2**

(12) # EUROPÄISCHE PATENTANMELDUNG

(21) Anmeldenummer: **82201232.4**

(22) Anmeldetag: **04.10.82**

(51) Int. Cl.³: **F 02 C 6/14**

(30) Priorität: **16.11.81 CH 7344/81**

(43) Veröffentlichungstag der Anmeldung:
**25.05.83 Patentblatt 83/21**

(84) Benannte Vertragsstaaten:
**CH DE GB LI SE**

(71) Anmelder: **BBC Aktiengesellschaft Brown, Boveri & Cie.**
**Haselstrasse**
**CH-5401 Baden(CH)**

(72) Erfinder: **Frutschi, Hans-Ulrich**
**Bruggerstrasse 9**
**CH-5223 Riniken(CH)**

(54) **Luftspeicherkraftwerk.**

(57) Bei einem Luftspeicherkraftwerk wird dem Verdichtungsprozess über ein Heizelement (18) Wärme entzogen und in einen Wärmespeicher (15) geleitet. Beim Turbinenbetrieb wird die kalte, dem Luftspeicher (1) entnommene Druckluft mit der gespeicherten Wärme zunächst in einem Lufterhitzer (21) vorgewärmt und dann über den Rekuperator (14) zur Gasturbine (12', 12'') geführt. Damit wird Tieftemperaturkorrosion an den rauchgasseitigen Austauschflächen des Rekuperators (14) vor allem beim Anfahren der Gasturbine vermieden.

Fig. 1

EP 0 079 624 A2

Croydon Printing Company Ltd.

0079624

87/81
Ke/eh

- 1 -

## Luftspeicher-Kraftwerk

Die Erfindung betrifft ein Luftspeicher-Kraftwerk, im wesentlichen bestehend aus einer Gasturbine mit vorgeschalteter Brennkammer und nachgeschaltetem Rekuperator, einem Verdichter mit mindestens einem Zwischenkühler und einem Nachkühler, einer elektrischen Maschine sowie einem Luftspeicher.

Derartige Anlagen sind besonders dort interessant, wo die nächtlichen Leistungsreserven von Grundlast-Stromerzeugungsanlagen nicht verwertet werden können. Ueberschüssige Nachtenergie wird dabei in pneumatischer Form in unterirdischem Kavernen gespeichert. Tagsüber steht diese Energie zur Abdeckung der Tagesspitzen zur Verfügung.

Eine erste Luftspeicher-Gasturbinenanlage der genannten Art ist das Kraftwerk Huntorf in der Bundesrepublik Deutschland, welches in den Brown Boveri Mitteilungen, Januar 1977, Band 64, Seite 34 bis 39 beschrieben ist. Um den Brennstoffverbrauch zu reduzieren und die Abgastemperaturen jenen Werten anzupassen, die auch bei Dampfkraftwerken üblich sind, ist bereits in dieser Anlagenbeschreibung die Anwendung eines Rekuperators in Aussicht gestellt worden, in welchem die Abwärme der Gasturbine auf die Druckluft übertragen wird.

Von Nachteil ist hierbei, dass sich die dem Luftspeicher entströmende kalte Druckluft hinsichtlich Tieftemperaturkorrosion schädlich auf der Rauchgasseite des Rekuperators auswirkt.

Der im Kennzeichen des Patentanspruchs 1 definierten Erfindung liegt deshalb die Aufgabe zugrunde, Mittel zu schaffen, mit welchen bereits beim Anfahren der Gasturbine die Temperaturen der Rekuperator-Austauschflächen so hoch sind, dass der Säuretaupunkt der Rauchgase nicht unterschritten wird.

Zwar ist es bei Luftspeicheranlagen mit sogenannter "adiabater Arbeitsweise" - d.h. ein Betrieb ohne Gasturbinen-Brennkammer - bekannt, die dem Luftspeicher entströmende Luft vor dem Eintritt in die Gasturbine mittels eines Wärmespeichers aufzuheizen, in welchem die zuvor verdichtete Luft anlässlich des Ladevorgangs abgekühlt wurde. Der dort zugrundeliegende Luftspeicherkreislauf unterscheidet sich jedoch hinsichtlich Turbinenprozess und Verdichtungsprozess erheblich vom Vorliegenden. Der dermassen bekannte Wärmespeicher erfüllt die Funktion der sonst üblichen Brennkammer, so dass es sich beim Wärmetausch um eine echte Luft-erhitzung auf Gasturbinen-Eintrittstemperatur handelt.

Demgegenüber handelt es sich bei der Erfindung lediglich um eine erste Luftvorwärmung. Dadurch können die während der Anfahrphase der Gasturbine herrschenden extrem ungünstigen Temperaturverhältnisse im Rekuperator überbrückt werden. Darüber hinaus besteht die Möglichkeit bei entsprechender Dimensionierung des Wärmespeichers und der Wärmeentnahmestellen die erfindungsgemässe Luftvorwärmung auch während des ganzen Leistungsbetriebes aufrechtzuerhalten.

In der Zeichnung ist ein Ausführungsbeispiel der Erfindung dargestellt, wobei der besseren Uebersichtlichkeit wegen Lade- und Entladevorgang des Luftspeichers getrennt dargestellt sind.

Es zeigen:

Fig. 1 die beim Ladevorgang des Luftspeichers und des Wärmespeichers wirksamen Anlageteile;

Fig. 2 die beim Leistungsbetrieb wirksamen Anlageteile

Gleiche Elemente sind in beiden Figuren, in denen erfindungsunwesentliche Elemente nicht dargestellt sind, mit gleichen Bezugszeichen versehen. Die Strömungsrichtung der diversen Arbeitsmittel und Wärmeträger d.h. Luft, Rauchgas und Kühlmittel ist mit Pfeilen bezeichnet.

Bei der in den Figuren gezeigten Anlage wird zum Laden des Luftspeichers 1 - der als unterirdische Kaverne teilweise dargestellt ist - der mehrgehäusige Verdichter 2', 2" von der motorisch betriebenen elektrischen Maschine 3 angetrieben. Diese ist mit dem schematisch angedeuteten Versorgungsnetz 4 verbunden. Der Niederdruckverdichter 2' wird über die im Stillstand lösbare Kupplung 5 direkt, der Hochdruckverdichter 2" über das Getriebe 6 angetrieben.

Der atmospärisch angesaugten Luft wird nach der Niederdruckverdichtung in einem ersten Zwischenkühler 7 Wärme entzogen. Zur Kühlung des Hochdruckverdichters 2" ist ein weiterer Zwischenkühler 8 vorgesehen. Die Zwischenkühlung bezweckt die Minimierung der Verdichterantriebsleistung. Nach der Endverdichtung wird die Luft im Nachkühler 9 auf die Speichertemperatur gekühlt und über das offene Absperrorgan 10 in die Kaverne geleitet. Durch das Nachkühlen wird die Luftdichte im Speicher 1 maximiert. Alle genannten Wärmeaustauscher 7, 8, 9 arbeiten kühlmittelseitig mit Wasser.

Sobald der Ladevorgang beendet ist, wird das Absperrorgan 10 geschlossen und der Verdichter 2', 2" stillgesetzt und abgekuppelt. Die in die Kaverne gepresste Luft steht nun für den Turbinenbetrieb zur Verfügung.

Hierzu wird die nunmehr als Generator operierende elektrische Maschine 3 über die Kupplung 11 mit der auf einer Welle angeordneten zweigehäusigen Gasturbine 12', 12" verbunden. Das Luftventil 22 wird geöffnet, wodurch die Gasturbine angefahren wird. Dabei durchströmt die Luft zunächst die Hochdruckbrennkammer 13', wird in der Hochdruckgasturbine 12' teilentspannt, durchströmt dann die Niederdruckbrennkammer 13", wird in der Niederdruckgasturbine 12" auf Enddruck entspannt und wird durch ein nicht gezeigtes Kamin in die Atmosphäre geleitet. Zur Erhöhung der Leistung werden die Brennkammern 13' und 13" gezündet. Die anlässlich der Entspannung umgesetzte Energie wird nach Umformung in der elektrischen Maschine 3 ans Netz 4 abgegeben.

Soweit steht bereits eine Anlage im Betrieb. Ferner ist es bekannt, zur Reduzierung des spezifischen Wärmeverbrauchs einen von den Abgasen der Gasturbine beaufschlagten Rekuperator 14 zur Luftvorwärmung vorzusehen. Hier ergibt sich nunmehr das Problem, dass die im Luftspeicher 1 etwa Umgegungstemperatur aufweisende Druckluft insbesondere beim Anfahren der Gasturbine 12', 12" zu sehr niedrigen Temperaturen der Wärmeübertragungsflächen im Rekuperator 14 führt, was die bereits erwähnte Tieftemperaturkorrosion auf dessen Rauchgasseite bewirkt.

Um dem abzuhelfen, wird gemäss der Erfindung beim Turbinenbetrieb die Luft stromaufwärts des Rekuperators 14 aus einem Wärmespeicher 15 vorgewärmt. Es kommt deshalb höchstens zu einer äusserst kurzzeitigen und unschädlichen Unterschreitung des Säuretaupunkts der Turbinenrauchgase
beim Eintritt in den Rekuperator 14. Der Wärmespeicher
15 besteht im vorliegenden Fall aus einer Kolonne von 3
in Serie geschalteten Speicherflaschen, die in beiden Richtungen von einem Wärmeträger, vorzugsweise Wasser durchströmt werden können. Das Wasser strömt hierbei in zwei
trennbaren Teilkreisläufen.

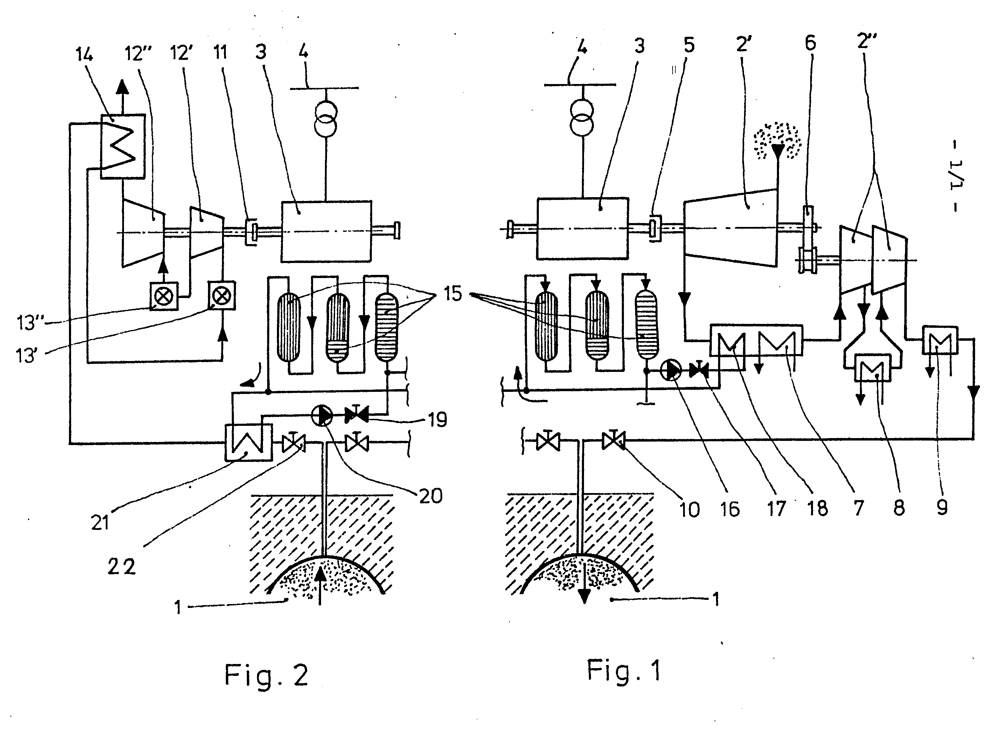

Der Ladevorgang dieses Heisswasserspeichers 15, welcher
gleichzeitig mit Laden des Luftspeichers 1 vor sich geht,
wird anhand von Fig. 1 erläutert:

In einem geschlossenen Kreis wird mittels einer Umwälzpumpe 16 bei offenem Abschlussorgan 17 Druckwasser durch
ein zusätzliches, im Zwischenkühler 7 angeordnetes Heizelement 18 gefördert, darin aufgeheizt und als Heisswasser
in den Flaschen 15 gespeichert ( vertikale Schraffur).
Wegen des geschlossenen Kreises wird das Kaltwasser (horizontale Schraffur) gleichzeitig aus dem Speicher 15 hinaus- und zur Pumpe 16 hingedrängt. Es versteht sich, dass
die Ladedauer eine Funktion des Speichervolumens und der
Umwälzgeschwindigkeit ist.

Zu Beginn des in Fig. 2 dargestellten Generatorbetriebes
wird der zweite Teilkreislauf in Betrieb genommen. Hierzu
wird bei offenem Abschlussorgan 19 die Umwälzpumpe 20 angefahren, welche das Heisswasser aus dem Speicher 15 durch
einen Lufterhitzer 21 fördert, der luftseitig stromaufwärts
des Rekuperators 14 angeordnet ist. Die dem Luftspeicher 1
entströmende Druckluft erwärmt sich beim Druchgang durch
diesen Lufterhitzer 21 so stark, dass die nach dem Zünden
der Brennkammern 13', 13" entstehenden Rauchgase im Rekuperator 14 nicht oder höchstens nur für sehr kurze Zeit
mit kalten Wärmeaustauschflächen in Berührung kommen.

An einem Zahlenbeispiel seien die für die Wirkungsweise der Erfindung massgeblichen Temperaturen, Drücke und Massenflüsse näher erläutert. Der Kreislaufdruck im Wärmespeichersystem sei mit 20 bar, die Temperatur des Kaltwassers mit 60° C und jene des Heisswassers mit 180° C angenommen. Letzteres ist mit geringem Aufwand erreichbar, wenn das Heizelement 18 mit Luft von 230° C aus dem Niederdruckverdichter 2' beaufschlagt wird und diese auf 150° C abkühlt. Die Gasturbine wird mit einem Massenstrom von 300 kg/sec betrieben, wobei letztere eine Speichertemperator von 30° C hat. Beträgt der Heisswasser-Massenstrom 50 kg/sec, so kann das Arbeitsmittel im Lufterhitzer 21 auf 110° C Zuströmtemperatur zum Rekuperator 14 vorgewärmt werden. Im Rekuperator 14 wird dem Rauchgas von 440° C Turbinenaustrittstemperatur auf 150° C Kamineintrittstemperatur Wärme entzogen. Will man diese Luftvorwärmung während eines achtstündigen Turbinenbetriebes kontinuierlich aufrechterhalten, so bedarf es eines Wärmespeichervolumens von 1'600 m³. Würde man hingegen die Vorwärmung nur während einer zehnminütigen Anfahrzeit durchführen, so langt hierfür ein etwa 50 mal kleineres Speichervolumen.

Erwähnt sei noch anhand dieses Zahlenbeispieles, dass gerade in der wichtigen Anfangsperiode des Anfahrvorgangs die Erfindung ihre grösste Wirkung erzielt. Dadurch, dass der Luftmassenstrom durch das Luftventil 12 noch stark gedrosselt ist, erwärmt sich die Luft bei gegebener Austauschfläche im Lufterhitzer 21 stärker als im Normalbetrieb, beispielsweise auf etwa 150° C, was zu einem schnelleren Aufheizen der gefährdeten Austauschflächen im Rekuperator 14 führt.

Selbstverständlich ist die Erfindung nicht auf das Dargestellte und Beschriebene beschränkt. Die Wärmeentnahme könnte genauso gut im Zwischenkühler 8 oder im Nachkühler 9 erfolgen. Des weiteren könnte je nach Auslegung der beiden Teilkreisläufe und ihrer Komponenten nur eine Umwälzpumpe zur Anwendung gelangen. Letztendlich ist auch die Wahl des Speichervolumens eine Frage der Kostenoptimierung der Stromerzeugung.

Patentansprüche

1. Luftspeicherkraftwerk, im wesentlichen bestehend aus einer Gasturbine mit vorgeschalteter Brennkammer und nachgeschaltetem Rekuperator, einem Verdichter mit mindestens einem Zwischenkühler und einem Nachkühler, einer elektrischen Maschine sowie einem Luftspeicher, dadurch gekennzeichnet, dass ein Wärmespeicher (15) vorgesehen ist, der Wärme aus dem Verdichtungsprozess aufnimmt und diese Wärme zeitlich verschoben anlässlich des Turbinenbetriebes in einem zwischen Luftspeicher (1) und Rekuperator (14) angeordneten Lufterhitzer (21) abgibt.

2. Luftspeicherkraftwerk nach Anspruch 1, dadurch gekennzeichnet, dass der Wärmespeicher (15) ein Heisswasserspeicher ist.

3. Luftspeicherkraftwerk nach Anspruch 2, dadurch gekennzeichnet, dass der Heisswasserspeicher mehrere in Serie geschaltete Speicherflaschen aufweist.

4. Luftspeicherkraftwerk nach Anspruch 1, dadurch gekennzeichnet, dass die zu speichernde Wärme einem Zwischenkühler (7, 8) des Verdichters (2', 2") entnommen ist.

5. Luftspeicherkraftwerk nach Anspruch 1, dadurch gekennzeichnet, dass die zu speichernde Wärme dem Nachkühler (9) entnommen ist.

Fig. 2

Fig. 1

- 1/1 -

0079624